# EUROPEAN PATENT SPECIFICATION

(11) **EP 3 904 226 B1**
(45) Date of publication and mention of the grant of the patent: **16.11.2022**
(21) Application number: 19906164.9
(22) Date of filing: 30.09.2019
(51) Int. Cl.: B65D 1/26, B65D 43/16, B65D 8/00, B65D 6/00

(54) **COMBINED PAPER AND PLASTIC PACKAGING BOX**
KOMBINATION AUS PAPIER- UND PLASTIKVERPACKUNGSSCHACHTEL
BOÎTE D'EMBALLAGE EN PAPIER ET EN PLASTIQUE COMBINÉS

(30) Priority: 29.12.2018 CN 201822254842 U
(43) Date of publication of application: 03.11.2021
(73) Proprietor: Shanghai Zidan Food Packaging & Printing Co., Ltd., Shanghai 201111 (CN)
(72) Inventor: LU, Weida, Shanghai 201111 (CN); CHEN, Decang, Shanghai 201111 (CN); WU, Jiadong, Shanghai 201111 (CN); HE, Congyou, Shanghai 201111 (CN)
(74) Representative: Sun, Yiming
(86) International application number: PCT/CN2019/109480
(87) International publication number: WO 2020/134300

(56) References cited:
- EP-A1- 2 835 320
- US-A- 3 119 540

## Description

### BACKGROUND OF THE INVENTION

### Technical Field

The invention relates to a packaging box, in particular to a paper and plastic combined packaging box.

### Description of Related Art

At present, the majority of packaging boxes for containing fluid or powder are metal or PE packaging boxes. As awareness of environmental protection grows, paper packaging boxes draw more and more attention. However, the paper packaging boxes face a problem of edge sealing, and their shape is greatly limited due to materials (most of the paper packaging boxes are square), which greatly limit the application of the paper packaging box.

EP 2835320 A1 refers to an injection moulding method for producing a packaging, wherein carton plates are assembled to a box shape by a plastic frame.

US 3119540 A relates to a thin-walled object produced by injection moulding of a plastic polymer wherein the object has a low average wall thickness while having a high rigidity to weight ratio, thus requiring a low amount of plastic polymer per unit of wall surface of said object.

### BRIEF SUMMARY OF THE INVENTION

The objective of the invention is to provide a paper and plastic combined packaging box to overcome defects in the prior art.

The invention is set out in the appended set of claims.

Compared with the prior art, the invention has the following beneficial effects:
(1) On a tangent plane, the cardboard is wrapped by plastic, such that the cardboard is not moistened by fluid, and the packaging box is also sealed by the plastic member (fastening connection between the upper edge plastic member and the box cover plastic member), achieving high sealing performance.
(2) The integrated plastic frame, matched with cardboards made of different materials and exquisite printed patterns, can have various elegant appearances, overcoming the defect in the prior art that current cartons have a single shape.
(3) The paper and plastic combined packaging box, compared with cartons, has higher strength, greatly saves plastic while ensuring strength and sealing performance, not only reduces cost, but also is more environmentally-friendly.

### BRIEF DESCRIPTION OF THE SEVERAL VIEWS OF THE DRAWINGS

FIG. 1 is a schematic diagram of an open packaging box according to the invention;
FIG. 2 is a schematic diagram of a closed packaging box according to the invention;
FIG. 3 is a bottom view of a closed packaging box according to the invention.

Reference signs: 1. Box cover cardboard; 21. Side-walled cardboard; 22. Box bottom cardboard; 31. Main body of box body plastic member; 32. Upper edge plastic member; 33. Box bottom support rib; 4. Box cover plastic member. 5. Plastic hinge.

### DETAILED DESCRIPTION OF THE INVENTION

The invention is further described in detail in conjunction with the attached drawings and specific embodiment.

### Embodiment 1

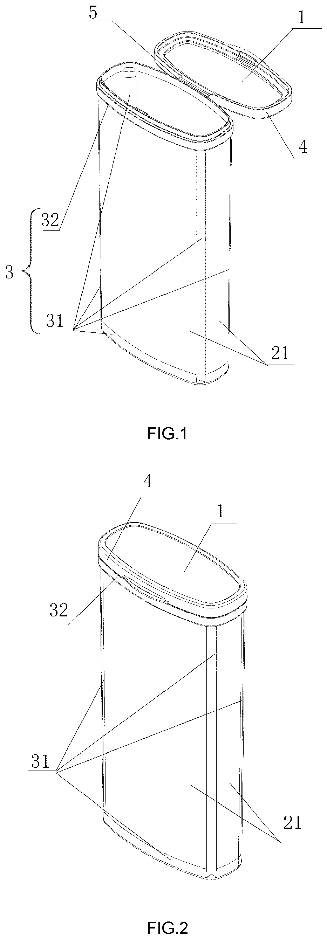

A paper and plastic combined packaging box, as shown in FIGs. 1 to 3, which is flip-type packaging box, includes a box cover cardboard 1, a box body cardboard portion and an integrated plastic frame formed by injection molding, where the box body cardboard portion is formed as an enclosure by a plurality of cardboards, and has an upper edge; the integrated plastic frame formed by injection molding is configured to connect the box cover cardboard 1 and the box body cardboard portion; the integrated plastic frame is comprised of a box body plastic member 3 and a box cover plastic member 4 which are connected through a plastic hinge 5; the box body plastic member 3 is comprised of a main body of box body plastic member 31 arranged at a gap between cardboards of the box body cardboard portion and an upper edge plastic member 32 which is wrapped at the upper edge of the box body cardboard portion; the box cover plastic member 4 is wrapped at the periphery of the box cover cardboard 1; and the upper edge plastic member 32 and the box cover plastic member 4 are in a fastening connection to implement sealing of the packaging box. According to this embodiment, during sealing of the packaging box, the box cover plastic member 4 is fastened on the upper edge plastic member 32 and connected with the upper edge plastic member through a fastener, as shown in FIG. 2.

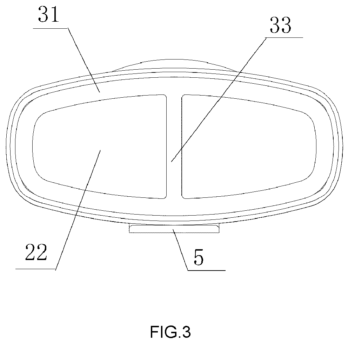

In the invention, the box body cardboard portion is comprised of four side-walled cardboards 21 for forming side walls and a box bottom cardboard 22 for forming a box bottom, and the main body of box body plastic member 31 is filled at the gap between the cardboards and wrapped on the inner side and outer side of the gap between cardboards. To better avoid the tangent plane of the cardboard from wetting, the width of the main body of box body plastic member 31 wrapped on the inner side of the gap between the cardboards is greater than that of the outer side of the gap between the cardboards (as shown in FIG. 1). Preferably, the shape of the box cover cardboard 1 is matched with that of the cross section of the box body cardboard portion. In this embodiment, the cross section of the box body cardboard portion presents the shape of an elliptical rectangle. The elliptical rectangle is formed by slightly outward bending four sides on the basis of a rounded rectangle. Since the box bottom bears all weight of the content, the main body of box body plastic member of the invention further includes a box bottom support rib, which is arranged at the bottom of the box bottom cardboard 22 to enhance the strength of the box bottom, as shown in FIG. 3.

In this embodiment, plastic are formed by injection molding at the four corners and at the peripheries of the bottom, the edge and the cover, and the integrally molded hinge combines the box body and the box cover, such that a product has tightness after its cover is closed. Compared with existing products such as cartons, the paper and plastic combined packaging box has higher strength; since the cardboard on the tangent plane is wrapped by plastic, the cardboard is protected from wetting by liquid; and the packaging box, matched with cardboards made of different materials and exquisite printed patterns, has various elegant appearances.

### Embodiment 2

This embodiment is basically the same as embodiment 1. Further, in this embodiment, the integrated plastic frame formed by injection molding is made of every injectable molding material. Further preferably, in this embodiment, the injectable molding material is a degradable material or a modified material which takes the degradable material as the mainstay. Injectable molding materials mentioned in this embodiment include, but are not limited to PE, PP, PET, ABS, PLA, PBS, PHA, etc.

The description of the above embodiment is intended for helping those ordinarily skilled in this field to understand and use the invention. Those skilled in this field can obviously easily make various changes to the above embodiment, and apply the described general principle into other embodiment without creative labor. Therefore, the invention is not limited to the above embodiment.

## Claims

1. A paper and plastic combined flip-type packaging box, comprising:
a box cover cardboard (1),
a box body cardboard portion, formed as an enclosure by a plurality of cardboards, and having an upper edge,
an integrated plastic frame formed by injection molding, configured to connect the box cover cardboard (1) and the box body cardboard portion, wherein the integrated plastic frame is comprised of a box body plastic member (3) and a box cover plastic member (4) which are connected through a plastic hinge (5); the box body plastic member (3) is comprised of a main body of box body plastic member (31) arranged at a gap between cardboards of the box body cardboard portion and an upper edge plastic member (32) which is wrapped at the upper edge of the box body cardboard portion; the box cover plastic member (4) is wrapped at the periphery of the box cover cardboard (1); and the upper edge plastic member (32) and the box cover plastic member (4) are in a fastening connection to implement sealing of the packaging box,
wherein the box body cardboard portion is comprised of four side-walled cardboards (21) for forming side walls and a box bottom cardboard (22) for forming a box bottom, and the main body of box body plastic member (31) is filled at the gap between the cardboards and wrapped on the inner side and outer side of the gap between cardboards and the width of the main body of box body plastic member (31) wrapped on the inner side of the gap between the cardboards is greater than that of the outer side of the gap between the cardboards.

2. The paper and plastic combined packaging box according to claim 1, wherein the cross section of the box body cardboard portion presents the shape of an elliptical rectangle.

3. The paper and plastic combined packaging box according to claim 2, wherein the shape of the box cover cardboard (1) is matched with the shape of the cross section of the box body cardboard portion .

4. The paper and plastic combined packaging box according to claim 1, wherein during sealing of the packaging box, the box cover plastic member (4) is fastened on the upper edge plastic member (32) and connected with the upper edge plastic member through a fastener.

5. The paper and plastic combined packaging box according to claim 1, wherein the integrated plastic frame formed by injection molding is made of an injectable molding material.

6. The paper and plastic combined packaging box according to claim 5, wherein the injectable molding material is a degradable material or a modified material which takes the degradable material as the mainstay.

## Patentansprüche

1. Aus Papier und Kunststoff kombinierter Verpackungsbehälter mit aufklappbarem Deckel, umfassend:
einen Behälterdeckelkarton (1),
einen Behälterkörper-Kartonabschnitt, der als Umhüllung durch eine Vielzahl von Kartons gebildet ist und einen oberen Rand aufweist,
einen integrierten Kunststoffrahmen, der durch Spritzgießen gebildet ist und so konfiguriert ist, dass er den Behälterdeckelkarton (1) und den Kartonabschnitt des Behälterkörpers verbindet, wobei der integrierte Kunststoffrahmen ein Kunststoffelement (3) des Behälterkörpers und ein Kunststoffelement (4) des Behälterdeckels aufweist, die durch ein Kunststoffscharnier (5) verbunden sind; wobei das Kunststoffelement (3) des Behälterkörpers einen Hauptkörper des Kunststoffelements (31) des Behälterkörpers, der an einem Spalt zwischen den Kartons des Kartonabschnitts des Behälterkörpers angeordnet ist, und ein Kunststoffelement (32) für den oberen Rand, das am oberen Rand des Kartonabschnitts um den Kartonkörper gewickelt ist, umfasst; wobei das Behälterdeckel-Kunststoffelement (4) um den Umfang des Behälterdeckelkartons (1) gewickelt ist; und wobei das Kunststoffelement (32) für den oberen Rand und das Behälterdeckel-Kunststoffelement (4) in einer Befestigungsverbindung stehen, um eine Versiegelung des Verpackungsbehälters zu bewirken,
wobei der Behälterkörper-Kartonabschnitt aus vier seitenwandigen Kartons (21) zum Ausbilden der Seitenwände und einen Behälterbodenkarton (22) zum Ausbilden eines Behälterbodens besteht und wobei der Hauptkörper des Behälterkörper-Kunststoffelements (31) an dem Spalt zwischen den Kartons eingefüllt und auf der Innenseite und Außenseite des Spalts zwischen den Kartons aufgewickelt wird und wobei die Breite des Hauptkörpers des Behälterkörper-Kunststoffelements (31), das auf die Innenseite des Spalts zwischen den Kartons gewickelt wird, größer ist als die der Außenseite des Spalts zwischen den Kartons.

2. Aus Papier und Kunststoff kombinierter Verpackungsbehälter nach Anspruch 1, wobei der Querschnitt des Behälterkörper-Kartonabschnitts die Form eines elliptischen Rechtecks aufweist.

3. Aus Papier und Kunststoff kombinierter Verpackungsbehälter nach Anspruch 2, wobei die Form des Behälterdeckelkartons (1) an die Form des Querschnitts des Kartonabschnitts des Behälterkörpers angepasst ist.

4. Aus Papier und Kunststoff kombinierter Verpackungsbehälter nach Anspruch 1, wobei während des Verschließens des Verpackungsbehälters das Behälterdeckel-Kunststoffelement (4) an dem Kunststoffelement (32) für den oberen Rand befestigt und mit dem Kunststoffelement für den oberen Rand durch ein Befestigungselement verbunden wird.

5. Aus Papier und Kunststoff kombinierter Verpackungsbehälter nach Anspruch 1, wobei der durch Spritzgießen gebildete integrierte Kunststoffrahmen aus einem Spritzgussmaterial hergestellt ist.

6. Aus Papier und Kunststoff kombinierter Verpackungsbehälter nach Anspruch 5, wobei das Spritzgussmaterial ein abbaubares Material oder ein modifiziertes Material ist, welches das abbaubare Material als Hauptstütze aufweist.

## Revendications

1. Boîte d'emballage de type pliable combinée en papier et plastique, comprenant :
un carton de couvercle de boîte (1),
une portion de carton de corps de boîte, formée comme une enceinte par une pluralité de cartons, et comportant un bord supérieur,
un cadre en plastique intégré, formé par moulage par injection, configuré pour relier le carton de couvercle de boîte (1) et la portion de carton de corps de boîte, le cadre en plastique intégré étant constitué d'un élément en plastique de corps de boîte (3) et d'un élément en plastique de couvercle de boîte (4), lesquels sont reliés par une charnière en plastique (5) ; l'élément en plastique de corps de boîte (3) est constitué d'un corps principal d'élément en plastique de corps de boîte (31) disposé au niveau d'un espacement entre des cartons de la portion de carton de corps de boîte et un élément en plastique de bord supérieur (32) enroulé au niveau du bord supérieur de la portion de carton de corps de boîte ; l'élément en plastique de couvercle de boîte (4) est enroulé au niveau de la périphérique du carton de couvercle de boîte (1) ; et l'élément en plastique de bord supérieur (32) et l'élément en plastique de couvercle de boîte (4) sont en connexion par fixation pour réaliser le scellement de la boîte d'emballage,
dans laquelle la portion de carton de corps de boîte est constituée de quatre cartons à parois latérales (21) destinés à former des parois latérales et d'un carton de fond de boîte (22) destiné à former un fond de boîte, et le corps principal d'élément en plastique de corps de boîte (31) est rempli au niveau de l'espacement entre les cartons et enroulé sur le côté intérieur et le côté extérieur de l'espacement entre des cartons et la largeur du corps principal d'élément en plastique de corps de boîte (31) enroulé sur le côté intérieur de l'espacement entre les cartons est supérieure à celle du côté extérieur de l'espacement entre les cartons.

2. Boîte d'emballage combinée en papier et plastique selon la revendication 1, dans laquelle la section transversale de la portion de carton de corps de boîte présente la forme d'un rectangle elliptique.

3. Boîte d'emballage combinée en papier et plastique selon la revendication 2, dans laquelle la forme du carton de couvercle de boîte (1) est adaptée à la forme de la section transversale de la portion de carton de corps de boîte.

4. Boîte d'emballage combinée en papier et plastique selon la revendication 1, dans laquelle, pendant le scellage de la boîte d'emballage, l'élément en plastique de couvercle de boîte (4) est fixé à l'élément en plastique de bord supérieur (32) et relié à l'élément en plastique de bord supérieur par un élément de fixation.

5. Boîte d'emballage combinée en papier et plastique selon la revendication 1, dans laquelle le cadre en plastique intégré formé par moulage par injection est constitué d'une matière de moulage injectable.

6. Boîte d'emballage combinée en papier et plastique selon la revendication 5, dans laquelle la matière de moulage injectable est une matière dégradable ou une matière modifiée composée essentiellement d'une matière dégradable.
